(19)

Europäisches
Patentamt
European
Patent Office
Office européen
des brevets

(11) **EP 4 220 546 A1**

(12) **EUROPEAN PATENT APPLICATION**
published in accordance with Art. 153(4) EPC

(43) Date of publication:
**02.08.2023 Bulletin 2023/31**

(21) Application number: **20955254.6**

(22) Date of filing: **25.09.2020**

(51) International Patent Classification (IPC):
**G06T 7/00** (2017.01)

(52) Cooperative Patent Classification (CPC):
**G06T 7/00**

(86) International application number:
**PCT/JP2020/036456**

(87) International publication number:
**WO 2022/064660 (31.03.2022 Gazette 2022/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED
Kawasaki-shi, Kanagawa 211-8588 (JP)**

(72) Inventors:
• **SAITO, Junya
  Kawasaki-shi, Kanagawa 211-8588 (JP)**
• **UCHIDA, Akiyoshi
  Kawasaki-shi, Kanagawa 211-8588 (JP)**
• **MURASE, Kentaro
  Kawasaki-shi, Kanagawa 211-8588 (JP)**

(74) Representative: **Hoffmann Eitle
Patent- und Rechtsanwälte PartmbB
Arabellastraße 30
81925 München (DE)**

(54) **MACHINE LEARNING PROGRAM, MACHINE LEARNING METHOD, AND INFERENCE DEVICE**

(57)    A machine learning program according to an embodiment causes a computer to perform an operation of generating a trained model and an operation of generating a third model. The operation of generating a trained model includes generating a trained model by performing machine learning of a first model based on: a first output value that is obtained when a first image is input to a first model in response to the input of training data containing a pair of the first image and a second image and containing a first label indicating which of the first image and the second image has captured the great-er movement of muscles of facial expression of a photographic subject; a second output value obtained when the second image is input to a second model that has common parameters with the first model; and the first label. The operation of generating a third model includes generating a third model by performing machine learning based on: a third output value obtained when a third image is input to the trained model; and a second label indicating either the intensity or the occurrence of the movement of the muscles of facial expression of a photographic subject captured in the third image.

FIG.1

EP 4 220 546 A1

**Description**

Field

The embodiments of the present invention are related to an estimation technology meant for estimating the facial expression.

Background

In order to estimate the facial expression, firstly, the description method needs to be defined regarding the facial expression to be estimated. Till now, a facial expression description method called AU (Action Unit) has been proposed. The AUs indicate the movement of the muscles of facial expression that are involved in the exhibition of the facial expression, and the movement is defined based on the anatomical knowledge of the facial muscles.

In a representative form of an AU estimation engine meant for estimating the AUs, machine learning is performed based on a large volume of teacher data, and image data of the facial expression as well as the occurrence or the intensity of each AU is used as the teacher data. The occurrence or the intensity of the teacher data is annotated by a specialist called a coder. Meanwhile, the following explanation is given only with reference to the intensity. However, the same explanation is applicable to the occurrence too.

Citation List

Patent Literature

[Patent Literature 1] U. S. Unexamined Patent Application Publication No. 2019/294868
[Patent Literature 2] Japanese Patent Application Laid-open No. 2020-57111
[Patent Literature 3] Japanese Patent Application Laid-open No. 2018-36734

Summary

Technical Problem

The intensity of the AUs is uniformly defined as the movement of the muscles of facial expression. However, the only factors that are observable from the outside include the amount of movement of the skin surface and the changes occurring in the appearance (wrinkles); and there is a lot of variation in those factors according to the age, the skeleton frame, the extent of obesity, and the manner of connection between the skin and the muscles of facial expression. Hence, it becomes difficult to define uniform boundary criteria (hereinafter, sometimes simply referred to as "criteria") regarding the intensity for all persons. Thus, as far as the intensity that is observable from the outside is concerned, the boundary criteria inevitably become obscure.

The coder, for example, watches a video of the photographic subject to whom the intensity is to be assigned as the correct answer label, and at the same time deduces the movement of the muscles of facial expression and assigns an intensity to each frame image. However, since the boundary criteria regarding the externallyobservable intensity are obscure and are not uniform for all persons; depending on the photographic subject, the correct answer label assigned by the coder sometimes has deviation in regard to the boundary criteria.

For that reason, in the conventional technology mentioned above, sometimes machine learning is performed using sets of data having different criteria, thereby resulting in the generation of a model that captures misrepresentative features. That leads to a decline in the estimation accuracy.

According to an aspect, it is an objective to provide a machine learning program, a machine learning method, and an estimation apparatus that enable achieving enhancement in the accuracy of the estimation of the facial expression.

Solution to Problem

According to an idea, a machine learning program that causes a computer to execute a process including: generating a trained model, and generating a third model. The generating the trained model that includes performing machine learning of a first model based on a first output value that is obtained when a first image is input to a first model in response to input of training data containing pair of the first image and a second image and containing a first label indicating which of the first image and the second image has captured greater movement of muscles of facial expression of a photographic subject, a second output value obtained when the second image is input to a second model that has common parameters with the first model, and the first label, and generating the trained model. The generating the third model that includes performing machine learning based on a third output value obtained when a third image is input to the trained model, and a second label indicating either intensity or occurrence of movement of muscles of facial expression of a photographic subject captured in the third image, and generating the third model.

Advantageous Effects of Invention

It becomes possible to achieve enhancement in the accuracy of the estimation of the facial expression.

Brief Description of Drawings

FIG. 1 is an explanatory diagram for explaining the overview of embodiments.
FIG. 2 is a block diagram illustrating an exemplary functional configuration of an information processing apparatus according to a first embodiment.
FIG. 3 is a flowchart for explaining an example of the operations performed in the information processing apparatus according to the first embodiment.
FIG. 4 is a flowchart for explaining an example of the operations performed in the information processing apparatus according to the first embodiment.
FIG. 5 is a block diagram illustrating an exemplary functional configuration of an information processing apparatus according to a second embodiment.
FIG. 6 is a block diagram illustrating an exemplary functional configuration of an information processing apparatus according to a third embodiment.
FIG. 7 is a block diagram illustrating an exemplary functional configuration of an information processing apparatus according to a fourth embodiment.
FIG. 8 is a diagram for explaining the processing details of the information processing apparatus according to the fourth embodiment.
FIG. 9 is a block diagram illustrating an exemplary computer configuration.

Description of Embodiments

Exemplary embodiments of a machine learning program, a machine learning method, and an estimation apparatus are described below with reference to the accompanying drawings. In the embodiments, the configurations having identical functions are referred to by the same reference numerals, and their explanation is not given again. Moreover, the machine learning program, the machine learning method, and the estimation apparatus according to the embodiments described below are only exemplary, and the embodiments are not limited by them. Moreover, the embodiments described below can be appropriately combined without causing any contradiction.

(Overview)

In a first embodiment, a second embodiment, a third embodiment, and a fourth embodiment (collectively called the embodiments) described below, during the machine learning of an AU estimation engine, information that is affected by the variation in the boundary criteria of the intensity is excluded from training datasets (training data) to be used in training, and then the training is carried out.
For example, due to the age, the skeleton frame, the extent of obesity, and the manner of connection between the skin and the muscles of facial expression; even if there is variation in the criteria among the photographic subjects included in the training data, the criteria for a single photographic subject remain the same. In that regard, in the embodiments, a model is generated that is capable of getting trained in the order relation of the intensities for a single photographic subject included in the training data (i.e., getting trained about the highest intensity), and can estimate the intensities for which the order relation is guaranteed (called "order intensities").

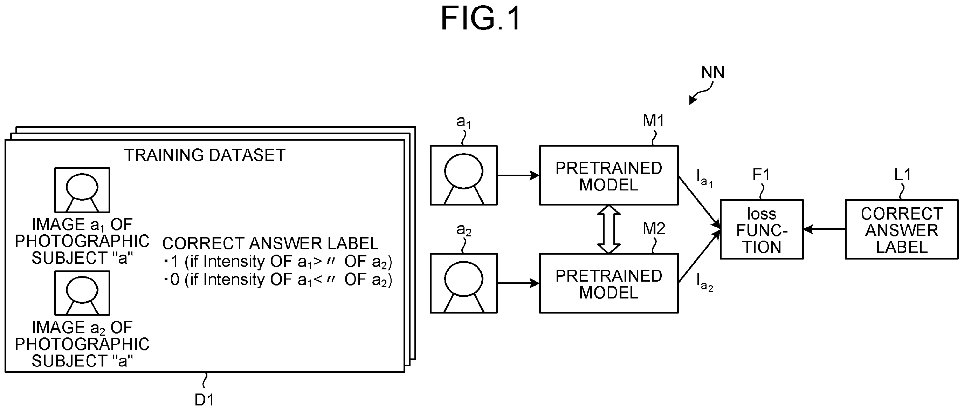

FIG. 1 is an explanatory diagram for explaining the overview of the embodiments. As illustrated in FIG. 1, in the embodiments, a training dataset D1 is assumed to include: an image pair (of images $a_1$ and $a_2$) that represents a pair of images of a single photographic subject "a"; and a correct answer label indicating the image, of the two images in the image pair, which has captured more movement of the muscles of facial expression of the photographic subject "a".
For example, in the embodiments, the coder compares the intensity assigned as a correct answer flag to each image, and obtains the correct answer label. As an example, if the intensity of the image $a_1$ is higher than the intensity

3

of the image $a_2$, then the correct answer label is set to "1". On the other hand, if the intensity of the image $a_1$ is lower than the intensity of the image $a_2$, then the correct answer label is set to "0". In the embodiments, the training dataset D1 is prepared for each of a plurality of photographic subjects.

Then, in the embodiments, using the training dataset D1 that is prepared, training of a neural network NN is done in such a way that the order intensities having a guaranteed order relation can be calculated. More particularly, the neural network NN is a network in which: pretrained models M1 and M2 (having common parameters (weights)) are used whose training is done in advance using datasets of standard object recognition; and a loss function F1 is used that evaluates the output value of the models M1 and M2.

For example, from the model M1, an order intensity ($I_{a1}$) is obtained as the output value in response to the input of the image $a_1$ to the training dataset D1. Moreover, from the model M2, an order intensity ($I_{a2}$) is obtained as the output value in response to the input of the image $a_2$ to the training dataset D1. Then, based on a correct answer label L1 and the output values ($I_{a1}$ and $I_{a2}$) of the models M1 and M2, the order is correct either if the correct answer label is equal to "1" and $I_{a1}>I_{a2}$ is satisfied or if the correct answer label is equal to "0" and $I_{a1}<I_{a2}$ is satisfied. Hence, the loss function F1 calculates the loss value to be small. On the other hand, the order is not correct either if the correct answer label is equal to "1" and $I_{a1}<I_{a2}$ is satisfied or if the correct answer label is equal to "0" and $I_{a1}>I_{a2}$ is satisfied. Hence, the loss function F1 calculates the loss value to be large. Then, the loss function F1 outputs the calculated loss value.

In the embodiments, retraining of the parameters in the neural network NN (the parameters of the model M1) is done in such a way that the loss value output by the loss function F1 becomes smaller. As a result, in a model in which the post-retraining parameters are used, the order intensities having the guaranteed order relation can be calculated with respect to the input images.

Subsequently, in the embodiments, according to the order intensities estimated by the generated model and according to the correct answer flags that are included in the training data and that are assigned by the coder (for example, according to the values of the intensities in the range between "0" and "5"), training is done for a conversion function that converts order intensities into intensities. Alternatively, according to the correct answer flags that are related to the occurrences and that are assigned by the coder, the conversion function can be configured to convert order intensities into occurrences.

Meanwhile, because of the variation in the criteria, some noise gets included in the order intensities and in the correct answer flags (for example, the values of the intensities) assigned by the coder. However, since the conversion function is a simple monotonically increasing function, the training can be done without getting affected by the noise.

In this way, in the embodiments, the model and the conversion function are generated by dividing the machine learning into two stages. With that, regarding the boundary criteria of the intensities, the training is done by excluding the information affected by the variation. As a result of performing such machine learning, in the embodiments, it becomes possible to generate a model in which the features related to the estimation of the facial expression, such as the movement of the muscles of facial expression, are correctly captured. That enables achieving enhancement in the accuracy of the estimation of the facial expression in the AU estimation engine.

(First embodiment)

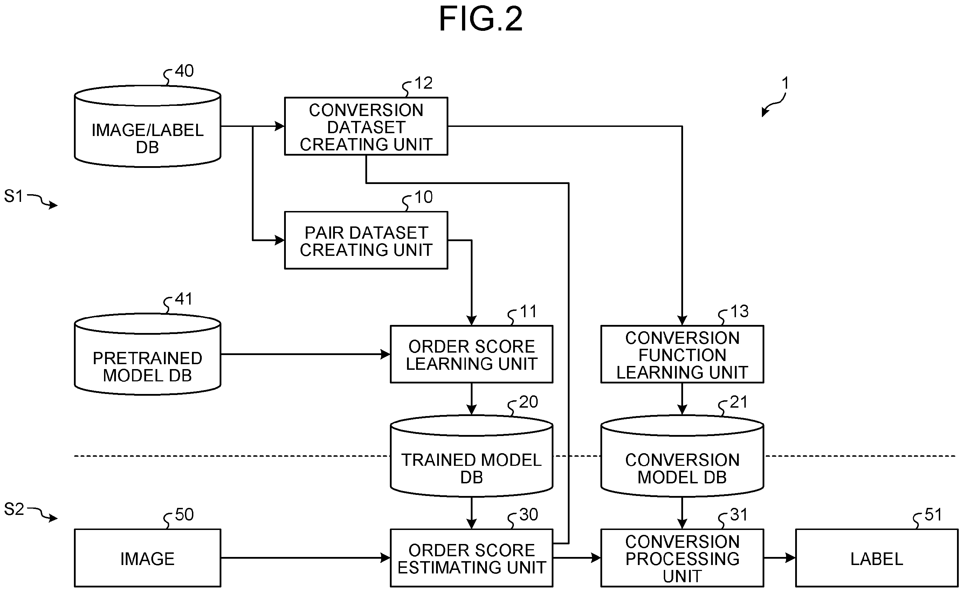

FIG. 2 is a block diagram illustrating an exemplary functional configuration of an information processing apparatus according to the first embodiment. As illustrated in FIG. 2, an information processing apparatus 1 includes a pair dataset creating unit 10, an order score learning unit 11, a conversion dataset creating unit 12, a conversion function learning unit 13, an order score estimating unit 30, and a conversion processing unit 31.

Herein, the pair dataset creating unit 10, the order score learning unit 11, the conversion dataset creating unit 12, and the conversion function learning unit 13 are functional units that mainly perform operations related to a training phase (S1) in which machine learning is performed. Moreover, the order score estimating unit 30 and the conversion processing unit 31 are functional units that mainly perform the operations related to an estimation phase (S2) in which a label 51 is estimated from an image 50, which is the estimation target, using the model generated as a result of performing machine learning.

The pair dataset creating unit 10 is a processing unit that, from an image/label DB 40 in which the training data meant for performing machine learning is stored, creates the training dataset D1 that contains the image pair ($a_1$ and $a_2$) of the singe photographic subject "a" and contains the correct answer label indicating which image in the image pair has the greater movement of the muscles of facial expression of the photographic subject "a".

More particularly, for example, the image/label DB 40 is used to store, as the training data, the correct answer flags (for example, the intensities) that are assigned by the coder and the images related to a plurality of photographic subjects "a" that are assigned with metadata such as photographic subject information about the photographic subjects "a". Moreover, the training data stored in the image/label DB 40 can also store videos in which each image represents a frame. The pair dataset creating unit 10 obtains an image pair, which is a pair of images of a single photographic subject "a", based on, for example, the metadata included in each image stored in the image/label DB 40. Alternatively, the pair dataset creating unit 10 can obtain, from the image/label DB 40, an image pair of such images for which the difference in the movement of the muscles of facial expression of the photographic subject "a" (for example, the difference in the intensities) is equal to or greater than a specific value.

Meanwhile, according to the embodiments, identical photographic subjects "a" are assumed to be, for example, the same person having the same photographic subject ID in the photographic subject information. However, alternatively, identical photographic subjects "a" can be persons having attributes (for example, the age, the gender, and the race) that are not responsible for causing a variation in the boundary criteria of the intensity. Meanwhile, if a video of the same person is divided into a plurality of videos and if the coder assigns the correct answer flag in units of the divided videos; then, due to the obscurity in the boundary criteria of the intensity, there may be a variation in the criteria even for the same person depending on the videos. In such a case, only when the videos are identical, the photographic subject can be treated as the same photographic subject.

Then, the pair dataset creating unit 10 compares the correct answer flags included in the metadata of the image pair, and obtains the correct answer label indicating which image of the image pair has the greater movement of the muscles of facial expression of the photographic subject "a". The pair dataset creating unit 10 repeatedly performs the operations explained above, and creates the training dataset D1 regarding each of a plurality of photographic subjects "a".

The order score learning unit 11 is a processing unit that uses the training dataset D1 created by the pair dataset creating unit 10, and gets trained in the neural network NN in such a way that the order intensities having a guaranteed order relation can be calculated.

More particularly, the order score learning unit 11 builds the trained models M1 and M2 (having common parameters) using the parameters obtained from a pretrained model DB 41 in which the pretrained parameters (weights) of the models M1 and M2 are stored. For example, the pretrained models M1 and M2 represent the VGG16 pretrained using ImageNet datasets and have a one-dimensional output of the final layer.

Moreover, based on the output values of the models M1 and M2 and based on the correct answer label L1, the order score learning unit 11 obtains the loss value according to the loss function F1. Regarding the loss function F1, for example, it is assumed that a function given below in Equation (1) is used.

$$loss = \sum_{(a_1, a_2)} \max\left(0, m - L_{a_1, a_2} \cdot (I_{a_1} - I_{a_2}) - (1 - L_{a_1, a_2}) \cdot (I_{a_2} - I_{a_1})\right) \qquad (1)$$

$$\left( \begin{array}{l} L_{a_1, a_2}: \text{Correct answer label } (0 \; or \; 1) \text{ of training dataset} \\ \cdot \text{ Intensity of image } a_1 < \text{Intensity of image } a_2 \Longrightarrow L_{a_1, a_2} = 0 \\ \cdot \text{ Intensity of image } a_1 > \text{Intensity of image } a_2 \Longrightarrow L_{a_1, a_2} = 1 \\ \quad m = 1 \end{array} \right)$$

Subsequently, the order score learning unit 11 gets retrained in the parameters of the neural network NN (the parameters of the model M1) in such a way that the loss value output by the loss function F1 becomes smaller. Meanwhile, as another example of the neural network NN, ResNet can be used. Alternatively, it is possible to use a model whose pretraining is done using face image datasets. Still alternatively, it is possible to use a model whose pretraining is not done and which has the weights initialized using random numbers. The order score learning unit 11 stores the parameters, which are obtained as a result of retraining, in a trained model DB 20.

The conversion dataset creating unit 12 is a processing unit that creates datasets to be used by the conversion function learning unit 13 for getting trained in the conversion function. More particularly, the conversion dataset creating unit 12 reads the images included in the training data stored in the image/label DB 40, and reads the correct answer flags (for example, the intensities or the occurrences) assigned to the images. Subsequently, the conversion dataset creating unit 12 inputs the read images to the order score estimating unit 30, and outputs the output (the order intensities) of the trained model generated as a result of training performed by the order score learning unit 11. Then, the conversion dataset creating unit 12 creates datasets in which the intensities (or the occurrences) of the correct answer flags assigned to the images with respect to the obtained order intensities are treated as the correct answer labels.

The conversion function learning unit 13 is a processing unit that uses the datasets created by the conversion dataset creating unit 12, and performs machine learning of a conversion function that converts order intensities into intensities (or occurrences). Then, the conversion function learning unit 13 stores, in a conversion model DB 21, the parameters related to the conversion function and obtained as a result of performing machine learning.

More particularly, based on the dataset created by the conversion dataset creating unit 12, the conversion function learning unit 13 performs regression learning to obtain the conversion function in such a way that the intensity values in the range between "0" and "5" are output as continuous values. Moreover, the conversion function learning unit 13 can perform classification learning to obtain the conversion function in such a way that discrete values of [0, 1, 2, 3, 4, 5] are output (in the case of the occurrences, discrete values of 0 and 1 are output). In the regression learning as well as in the classification learning, the conversion function learning unit 13 can obtain the conversion function according to a known machine learning method such as a neural network or an SVM (Support Vector Machine).

The order score estimating unit 30 is a processing unit that estimates the order intensities from the input image (for example, from the image 50 input as the estimation target).

More particularly, the order score estimating unit 30 reads, from the trained model DB 20, the parameters (weights) of the model generated by way of training by the order score learning unit 11; and builds a model. Then, the order score estimating unit 30 inputs the image 50 as the estimation target to the model, and estimates the order intensities.

The conversion processing unit 31 is a processing unit that converts order intensities, which are estimated by the order score estimating unit 30, into intensities (or occurrences) according to the conversion function. Then, the conversion processing unit 31 outputs the intensities (or the occurrences), which are obtained by conversion, as the image 50 indicating the estimation result with respect to the image 50.

More particularly, the conversion processing unit 31 reads, from the conversion model DB21, the parameters of the conversion function in which the conversion function learning unit 13 is trained; and builds a conversion function. Then, using the built conversion function, the conversion processing unit 31 converts the order intensities, which are estimated by the order score estimating unit 30, into intensities (or occurrences) and outputs the conversion result as the image 50.

Meanwhile, when regression learning of the conversion function is performed so as to output the continuous values, since the output range is restricted within a domain (0 to 5), the conversion processing unit 31 can perform correction to restrict the upper limit to "5" and the lower limit to "0". Moreover, the conversion processing unit 31 can round the continuous values off to the closest whole numbers, so that the output values are discretized in six stages of 0, 1, 2, 3, 4, and 5.

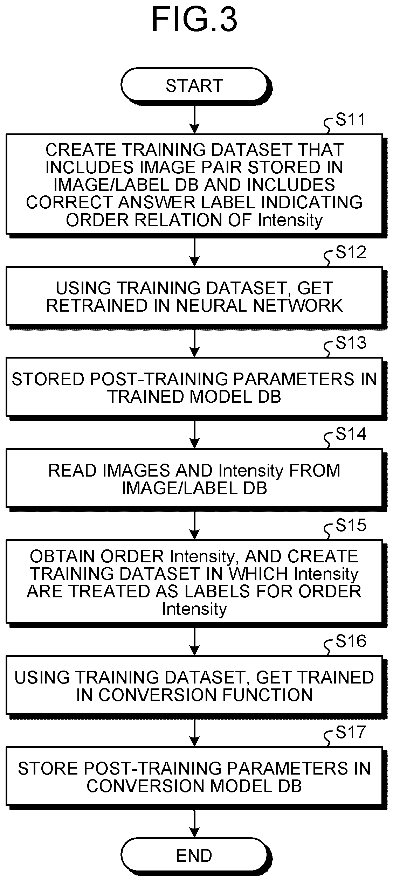

FIG. 3 is a flowchart for explaining an example of the operations performed in the information processing apparatus 1 according to the first embodiment. More particularly, FIG. 3 is a flowchart for explaining an example of the operations performed during the training phase (S1) in the information processing apparatus 1.

As illustrated in FIG. 3, once the operations are started, the pair dataset creating unit 10 creates the training dataset D1 that includes the image pair related to the same photographic subject "a" and stored the image/label DB 40, and includes the correct answer label indicating the order relation of the intensities (S11).

Then, the order score learning unit 11 gets retrained in the neural network NN using the created training dataset D1 (S12), and stores the parameters of the post-training neural network NN (the parameters of the model M1) in the trained model DB 20 (S13). Subsequently, the conversion dataset creating unit 12 reads the images from the image/label DB 40, and reads the correct answer flags (for example, the intensities) assigned to the images (S14) .

Then, the conversion dataset creating unit 12 inputs the read images to the order score estimating unit 30, and obtains the output (order intensities) from the trained model generated by way of training by the order score learning unit 11. Subsequently, the conversion dataset creating unit 12 creates a training dataset in which the intensities of the correct answer flags assigned to the images are treated as the correct answer labels for the obtained order intensities (S15).

Subsequently, the conversion function learning unit 13 gets trained in the conversion function using the training dataset created by the conversion dataset creating unit 12 (S16). Then, the conversion function learning unit 13 stores the parameters of the post-training conversion function in the conversion model DB 21 (S17). It marks the end of the operations.

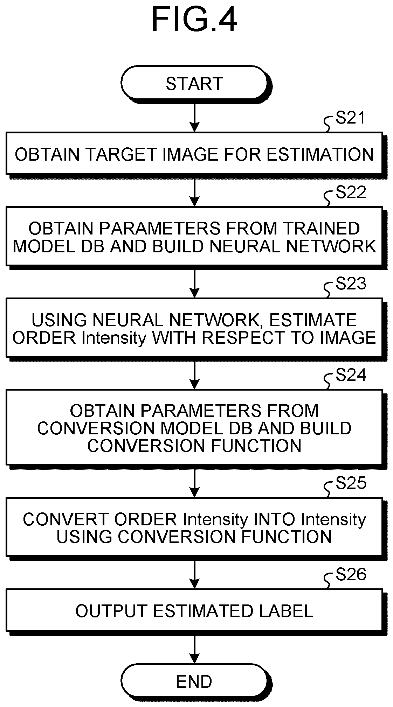

FIG. 4 is a flowchart for explaining an example of the operations performed in the information processing apparatus 1 according to the first embodiment. More particularly, FIG. 4 is a flowchart for explaining an example of the operations performed during the estimation phase (S2) in the information processing apparatus 1.

As illustrated in FIG. 4, once the operations are started, the order score estimating unit 30 obtains the image 50 as the estimation target (S21). Then, the order score estimating unit 30 obtains the parameters from the trained model DB 20 and builds a neural network (a trained model) (S22).

Then, the order score estimating unit 30 inputs the image 50 to the built neural network (the trained model) and obtains the output value, and estimates the order intensity with respect to the image 50 (S23).

Subsequently, the conversion processing unit 31 obtains the parameters from the conversion model DB 21 and builds a conversion function (S24). Then, using the conversion function that is built, the conversion processing unit 31 converts the order intensity, which is estimated by the order score estimating unit 30, into an intensity (S25). Subsequently, the conversion processing unit 31 outputs the intensity, which is obtained by conversion, as the estimated label 51 (S26).

(Second embodiment)

In the second embodiment, regarding the correct answer flags assigned to the training data, not only the correct answer flags assigned by a coder are included, but the measurement result (the intensities or the amounts of movement of the muscles of facial expression) obtained by a measurement apparatus, which measures the movement of the muscles of facial expression of the photographic subject, is also included.

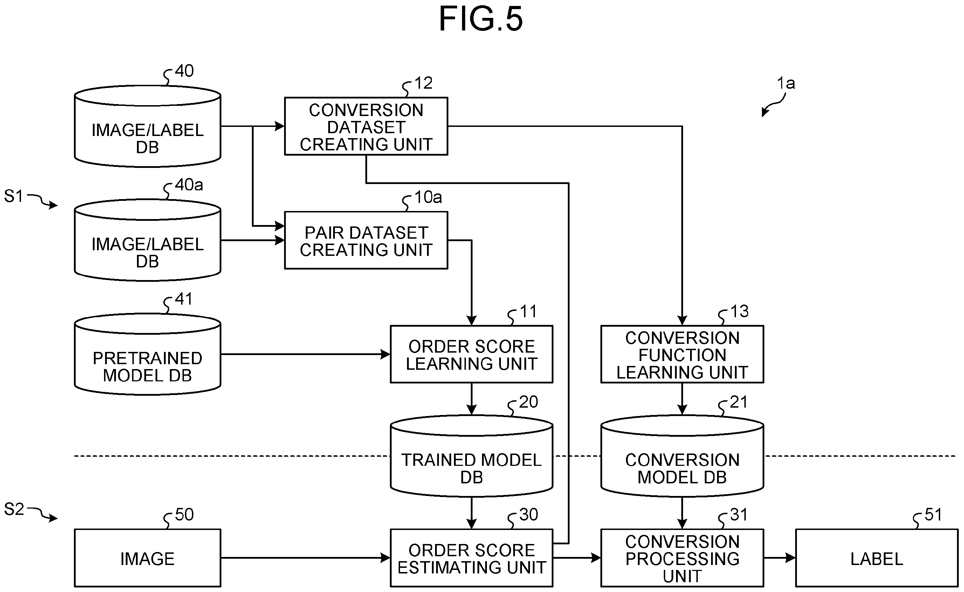

FIG. 5 is a block diagram illustrating an exemplary functional configuration of an information processing apparatus according to the second embodiment. As illustrated in FIG. 5, an image/label DB 40a is used to store, as the training data, the correct answer flags of the measurement result (the intensities or the amounts of movement of the muscles of facial expression) obtained by a measurement apparatus, and the images related to a plurality of photographic subjects "a" assigned with metadata such as photographic subject information indicating the photographic subjects "a".

In an information processing apparatus 1a, a pair dataset creating unit 10a refers to the image/label DBs 40 and 40a, and creates the learning database D1 that includes the image pair ($a_1$ and $a_2$) of the same photographic subject "a", and includes a correct answer label indicating which of the two images in the image pair has captured the greater movement of the muscles of facial expression of the photographic subject "a".

There are times when, due to a man-made mistake, the correct answer flags (for example, the intensities) include some noise even for the same photographic subject "a". In contrast, in the measurement result obtained by a measurement apparatus, there is no noise attributed to a man-made mistake. Hence, when the measurement result obtained by a measure apparatus is included in the correct answer flags, it can be expected to achieve enhancement in the learning accuracy of the order relation.

(Third embodiment)

In the third embodiment, without using the training data having the correct answer flags assigned by the coder, training in a first stage is performed using the training data to which the measurement result of a measurement apparatus is assigned as the correct answer flags. Regarding the training performed in a second stage (the training of a conversion function), the training data having the correct answer flags assigned by a coder is used.

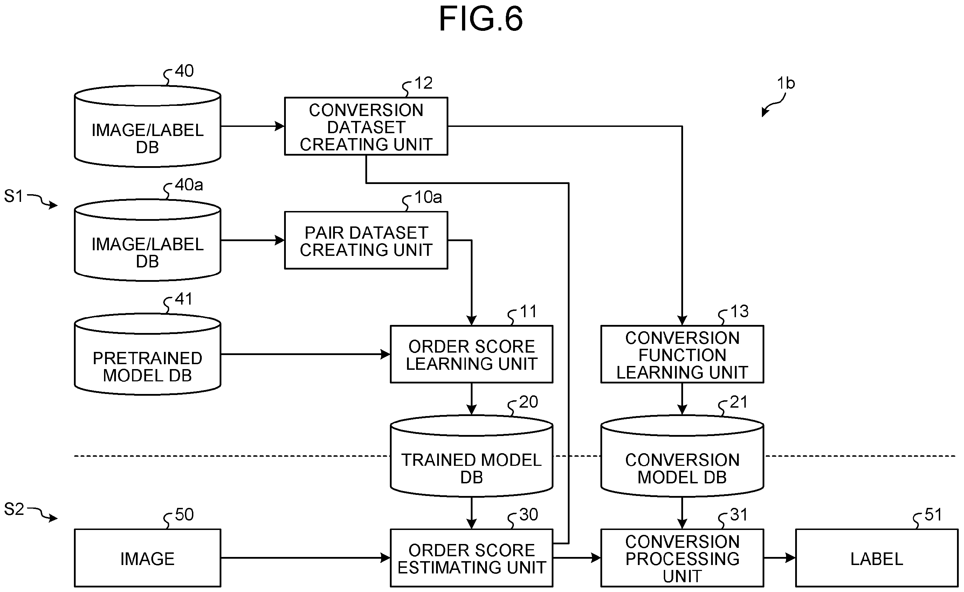

FIG. 6 is a block diagram illustrating an exemplary functional configuration of an information processing apparatus according to the third embodiment. As illustrated in FIG. 6, in an information processing apparatus 1b, the pair dataset creating unit 10a does not refer to the image/label DB 40, and creates the training dataset D1 by referring to the image/label DB 40a. Meanwhile, the conversion dataset creating unit 12 refers to the image/label DB 40 and creates a dataset that is to be used by the conversion function learning unit 13 to get trained in a conversion function.

In this way, in the information processing apparatus 1b, the correct answer flags assigned by the coder are not used, and the order relation is learnt using the measurement result obtained by a measurement apparatus. With that, it can be expected to achieve further enhancement in the learning accuracy of the order relation.

(Fourth embodiment)

In the fourth embodiment, during the training phase (S1), machine learning of a conversion function is performed according to such machine learning which includes the feature quantity of a video that has images as singular frame images. Moreover, during the estimation phase (S2), based on the feature quantity of the source video that includes the target image 50 for estimation as a singular frame image, the label 51 is estimated according to a conversion function.

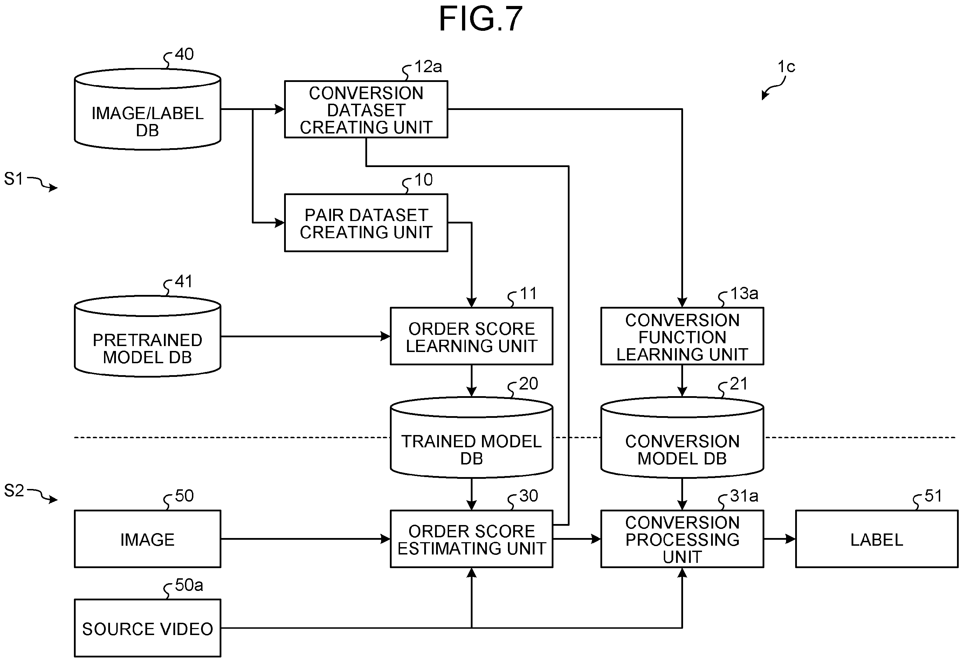

FIG. 7 is a block diagram illustrating an exemplary functional configuration of an information processing apparatus according to the fourth embodiment. As illustrated in FIG. 7, in an information processing apparatus 1c, a conversion dataset creating unit 12a obtains the images included in the image/label DB 40 as well as obtains a video in which those images are included as singular frames. Then, the conversion dataset creating unit 12a analyzes the obtained video; obtains the feature quantity of the video; and includes the obtained feature quantity in the dataset to be used in getting trained in the conversion function.

In the information processing apparatus 1c, a conversion function learning unit 13a uses the dataset created by the conversion dataset creating unit 12 and, at the time of performing machine learning of a conversion function that converts order intensities into intensities (or occurrences), performs machine learning in which the feature quantity based on the video is also involved.

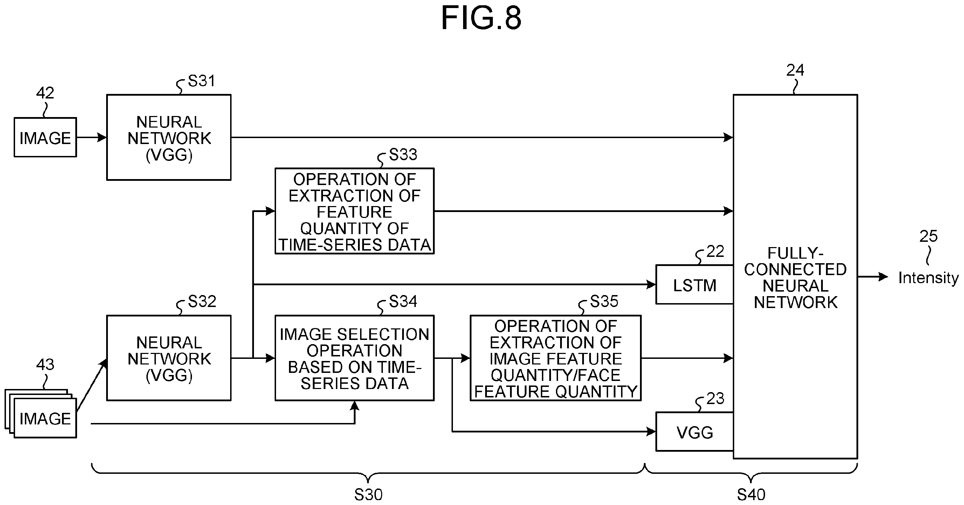

FIG. 8 is a diagram for explaining the processing details of the information processing apparatus 1c according to the fourth embodiment. In FIG. 8, the specific operations performed by the conversion dataset creating unit 12a are illustrated as S30. Moreover, in FIG. 8, the configuration involved in the operations performed by the conversion function learning unit 13a is illustrated as S40.

As illustrated in FIG. 8, the conversion dataset creating unit 12a inputs an image 42, which is stored in the image/label DB 40, to the order score estimating unit 30, and obtains the output values (the order intensities) from a trained model (a neural network (VGG)) (S31).

Moreover, the conversion dataset creating unit 12a inputs a video 43, which includes the image 42 as a singular frame, to the order score estimating unit 30, and obtains time-series output values (time-series data of the order intensities) from a trained model (a neural network (VGG)) (S32).

After the operation at S32 is performed, the conversion dataset creating unit 12a extracts the feature quantity related to the distribution of the time-series data (S33). More particularly, the conversion dataset creating unit 12a obtains a histogram based on the time-series data (for example, obtains the frequency of the order intensities equal to or lower than -10, the frequency of the order intensities between -10 and -9, the frequency of the order intensities between -9 and -8, ..., the frequency of the order intensities between 9 and 10, and the frequency of the order intensities equal to or higher than 10). Moreover, the conversion dataset creating unit 12a obtains the percentile based on the time-series data (obtains the 0-th percentile, the 10-th percentile, ..., and the 100-the percentile).

In addition, after the operation at S32 is performed, the conversion dataset creating unit 12a performs an image selection operation based on the time-series data (S34). More particularly, the conversion dataset creating unit 12a selects, from among the time-series data, one or more images that have the order intensities satisfying predetermined conditions (for example, selects the images having the lowest order intensity).

After the operation at S34 is performed, the conversion dataset creating unit 12a performs an extraction operation for extracting the image feature quantity/face feature quantity regarding each selected image (S35). More particularly, the conversion dataset creating unit 12a extracts the SIFT feature quantity of each image and extracts the landmark of that image.

The conversion function learning unit 13a inputs the dataset created at S30 to an LSTM 22 representing a model for the conversion function, to a VGG 23, and to a fully-connected neural network 24; and obtains intensity 25.

More particularly, the fully-connected neural network 24 is configured to receive input of the order intensities of the images according to S31 and to receive input of other feature quantities. For example, as a network to which the time-series data is input without modification, a network such as the LSTM 22 is used that is designed for time-series data. Moreover, as a network to which the image data is input without modification, a network such as the VGG 23 is used that is designed for image data. Moreover, the configuration is such that the output of the LSTM 22 and the output of the VGG 23 are connected to the fully-connected neural network 24.

Returning to the explanation with reference to FIG. 7, a conversion processing unit 31a implements the conversion function built on the basis of the parameters stored in the conversion model DB 21, and estimates the label 51 based on the order intensities estimated by the order score estimating unit 30 and based on the feature quantities of a source video 50a. More particularly, in an identical manner to the conversion dataset creating unit 12a, the conversion processing unit 31a obtains the feature quantities of the source video 50a; inputs the source video 50a and the order intensities to the conversion function; and estimates the label 51.

In this way, in the fourth embodiment, since the feature quantities of the videos are also involved, it becomes possible to estimate the facial expression with a higher degree of accuracy.

As explained above, the information processing apparatus 1 creates a pair dataset that includes an image pair stored in the image/label DB 40 and a correct answer label indicating which of the two images in the image pair has captured the greater movement of the muscles of facial expression of the photographic subject. Then, the information processing apparatus 1 generates a trained model by performing machine learning of the pretrained model M1 based on: the output value obtained as a result of inputting the first image of the image pair to the model M1; the output value obtained as a result of inputting the second image of the image pair to the model M2 that has common parameters with the model M1; and a first label. Subsequently, the information processing apparatus 1 generates a model (a conversion function) by performing machine learning based on: the output value obtained as a result of inputting a third image included in the image/label DB 40 to; and a label indicating the intensity or the occurrence of the movement of the muscles of facial expression of the photographic subject included in that image.

As a result of performing machine learning in the two stages explained above, the information processing apparatus 1 becomes able to generate a model meant for estimation by correctly capturing the features related to the estimation of the facial expression such as the movement of the muscles of facial expression. Moreover, using the generated model, the information processing apparatus 1 can estimate the label 51 with respect to the image 50 representing the estimation target, that is, estimate the facial expression, and thus can achieve enhancement in the accuracy of the estimation of the facial expression.

Meanwhile, the image pair involved in the generation of a trained model is the image pair of the same photographic subject. For example, in the images included in the image/label DB 40, even if the criteria among the photographic subjects vary depending on the age, the skeleton frame, the extent of obesity, and the manner of connection between the skin and the muscles of facial expression; the criteria remain the same for the same photographic subject. Hence, as a result of using the image pair of the same photographic subject for generating a trained model, the information processing apparatus 1 becomes able to generate a trained model capable of more appropriately estimating whether the movement of the muscles of facial expression of the photographic subject is large (i.e., estimating the order relation of the intensities).

Moreover, the correct answer label in a pair dataset is assigned based on the measurement result (for example, the intensity) obtained by a measurement apparatus by measuring the movement of the muscles of facial expression of the photographic subject. For example, even with the movement of the same muscles of facial expression, the amount of movement of the muscles differs according to the person. Thus, in an identical manner to the case in which the correct answer label is assigned by a coder who is a specialist, the measurement result obtained by a measurement apparatus too includes variation in the criteria depending on the photographic subject. In the information processing apparatus 1, even when the correct answer label is assigned based on the measurement result obtained by a measurement apparatus, a model meant for estimation can be generated by correctly capturing the features related to the estimation of the facial expression.

In the image pair involved in the generation of a trained model, the movement of the muscles of facial expression of the photographic subject differs among the images by a value equal to or greater than a specific value. In this way, as a result of using an image pair of such images in which the difference in the movement of the muscles of facial expression of the photographic subject is equal to or greater than a specific value and in which there is a clear difference in the movement of the muscles of facial expression of the photographic subject, it becomes possible to generate a model having a higher degree of accuracy.

Meanwhile, the image pair involved in the generation of a trained model can have the same magnitude of the movement of the muscles of facial expression. In that case, for example, Equation (2) given below is used as the loss function F1.

$$ loss = \sum_{(a_1, a_2)} \left| L_{a_1, a_2} \right| * \max\left(0, m - L_{a_1, a_2} \cdot \left(I_{a_1} - I_{a_2}\right)\right) + \left(1 - \left|L_{a_1, a_2}\right|\right) * \left|I_{a_1} - I_{a_2}\right| \qquad (2) $$

$$\left( \begin{array}{l} L_{a_1, a_2}: \text{Correct answer label } (-1 \text{ or } 0 \text{ or } 1) \text{ of training dataset} \\ \cdot \text{ Intensity of image } a_1 < \text{Intensity of image } a_2 \Rightarrow L_{a_1, a_2} = -1 \\ \cdot \text{ Intensity of image } a_1 = \text{Intensity of image } a_2 \Rightarrow L_{a_1, a_2} = 0 \\ \cdot \text{ Intensity of image } a_1 > \text{Intensity of image } a_2 \Rightarrow L_{a_1, a_2} = 1 \\ \quad m = 1 \end{array} \right)$$

In the information processing apparatus 1, as a result of using the image pair having the same magnitude of the movement of the muscles of facial expression, it becomes possible to generate a model having a higher degree of accuracy.

Moreover, the information processing apparatus generates a model (a conversion function) by performing machine learning in which the feature quantities based on the video including a third image are used. As a result of including the feature quantities of the video, the information processing apparatus becomes able to generate a model having a higher degree of accuracy.

Furthermore, the feature quantities based on a video including a third image can be at least one of the following: the time-series data attributed to the images included in the video; the feature quantities related to the distribution of the time-series data; one or more images selected from the image group based on the distribution of the time-series data; and the feature quantities of such one or more images. In the information processing apparatus, as a result of performing machine learning by including such feature quantities, it becomes possible to generate a model having a higher degree of accuracy.

(Other information)

The constituent elements of the apparatus illustrated in the drawings are merely conceptual, and need not be physically configured as illustrated. The constituent elements of the apparatus illustrated in the drawings are merely conceptual, and need not be physically configured as illustrated. The constituent elements, as a whole or in part, can be separated or integrated either functionally or physically based on various types of loads or use conditions. For example, the functional configuration responsible for the training phase (S1) and the functional configuration responsible for the estimation phase (S2) in each of the information processing apparatuses 1, 1a, 1b, and 1c can alternatively be separate configurations implemented using independent apparatus configurations.

Moreover, various process functions such as the pair dataset creating units 10 and 10a, the order score learning unit 11, the conversion dataset creating units 12 and 12a, the conversion function learning units 13 and 13a implemented in each of the information processing apparatuses 1, 1a, 1b, and 1c can be entirely or partially implemented by a CPU (or a microcomputer such as an MPU or an MCU (Micro Controller Unit), or a GPU (Graphics Processing Unit)). Alternatively, it goes without saying that the process functions can be entirely or partially implemented by programs that are analyzed and executed by a CPU (or a microcomputer such as an MPU or an MCU, or by a GPU), or are implemented as hardware by wired logic. Still alternatively, the process functions in each of the information processing apparatuses 1, 1a, 1b, and 1c can be implemented according to cloud computing using a plurality of computers in cooperation.

(Example of computer configuration)

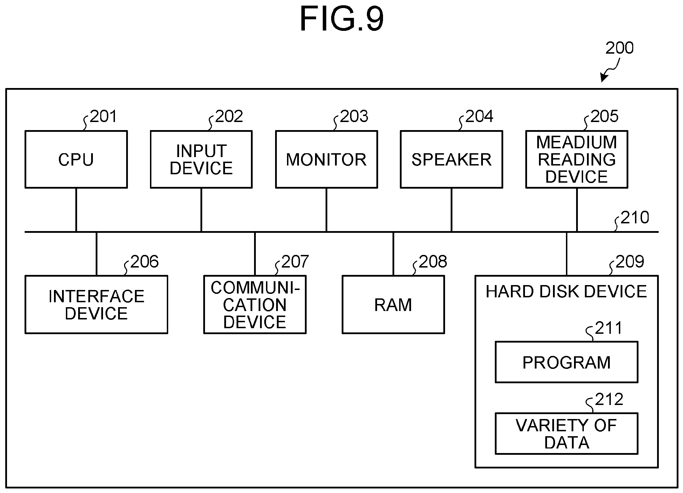

The various operations explained earlier in the embodiments can be implemented when a computer executes a program written in advance. Given below is the explanation of an exemplary computer configuration (hardware) in which a program having the functions identical to the embodiments is executed. FIG. 9 is a block diagram illustrating an exemplary computer configuration.

As illustrated in FIG. 9, a computer 200 includes a CPU 201 that performs various arithmetic operations; an input device 202 that receives input of data; a monitor 203; and a speaker 204. The computer 200 includes a medium reading device 205 that reads a program from a memory medium; an interface device 206 that is used to connect the computer 200 to various devices; and a communication device 207 that is used to communicably connect the computer 200 to external devices in a wired or wireless manner. Moreover, the computer 200 includes a RAM 208 that is used to temporarily store a variety of information; and includes a hard disk device 209. Furthermore, the constituent elements (201 to 209) of the computer 200 are connected to each other by a bus 210.

The hard disk device 209 is used to store a program 211 that is meant for implementing various operations of the functional configuration according to the embodiments (for example, the pair dataset creating units 10 and 10a, the order score learning unit 11, the conversion dataset creating units 12 and 12a, the order score estimating unit 30, and the conversion function learning units 13 and 13a). Moreover, the hard disk device 209 is used to store a variety of data 212 that is referred to by the program 211. For example, the input device 202 receives input of operation information from the operator. The monitor 203 displays various screens to be operated by the operator. The interface device 206 has, for example, a printing device connected thereto. The communication device 207 is connected to a communication network such as a local area network (LAN), and communicates a variety of information with external devices via the communication network.

The CPU 201 reads the program 211 from the hard disk device 209, loads it in the RAM 208, and executes it so as to implement the various operations of the abovementioned functional configuration (for example, the pair dataset creating units 10 and 10a, the order score learning unit 11, the conversion dataset creating units 12 and 12a, the order score estimating unit 30, and the conversion function learning units 13 and 13a). Meanwhile, the program 211 need not be stored in the hard disk device 209. For example, the computer 200 can read the program 211 that is stored in a memory medium readable for the computer 200, and can execute the program 211. Examples of the memory medium readable for the computer 200 include a portable recording medium such as a CD-ROM, a DVD, or a USB (Universal Serial Bus); a semiconductor memory such as a flash memory; and a hard disk drive. Alternatively, the program 211 can be stored in a device connected to a public line, or the Internet, or a LAN; and the computer 200 can read the program 211 from that device and execute it.

Reference Signs List

| | |
|---|---|
| 1, 1a, 1b, 1c | information processing apparatus |
| 10, 10a | pair dataset creating unit |
| 11 | order score learning unit |
| 12, 12a | conversion dataset creating unit |
| 13, 13a | conversion function learning unit |
| 20 | training model DB |
| 21 | conversion model DB |
| 22 | LSTM |
| 23 | VGG |
| 24 | fully-connected neural network |
| 25 | intensity |
| 30 | order score estimating unit |
| 31, 31a | conversion processing unit |
| 40, 40a | image/label DB |

| 41 | pretrained model DB |
| 42 | image |
| 43 | video |
| 50 | image |
| 50a | source video |
| 51 | label |
| 200 | computer |
| 201 | CPU |
| 202 | input device |
| 203 | monitor |
| 204 | speaker |
| 205 | medium reading device |
| 206 | interface device |
| 207 | communication device |
| 208 | RAM |
| 209 | hard disk device |
| 210 | bus |
| 211 | program |
| 212 | variety of data |
| a | photographic subject |
| D1 | training dataset |
| F1 | loss function |
| L1 | correct answer label |
| M1, M2 | pretrained model |
| NN | neural network |

**Claims**

1. A machine learning program that causes a computer to execute a process comprising:

   generating a trained model that includes

      performing machine learning of a first model based on

         a first output value that is obtained when a first image is input to a first model in response to input of training data containing pair of the first image and a second image and containing a first label indicating which of the first image and the second image has captured greater movement of muscles of facial expression of a photographic subject,
         a second output value obtained when the second image is input to a second model that has common parameters with the first model, and
         the first label, and

      generating the trained model; and

   generating a third model that includes

      performing machine learning based on

         a third output value obtained when a third image is input to the trained model, and
         a second label indicating either intensity or occurrence of movement of muscles of facial expression of a photographic subject captured in the third image, and

      generating the third model.

2. The machine learning program according to claim 1, wherein pair of the first image and the second image represents pair of images of same photographic subject.

3. The machine learning program according to claim 1, wherein the first label is assigned based on measurement result obtained by a measurement apparatus by measuring movement of muscles of facial expression of the photographic subject.

4. The machine learning program according to claim 1, wherein pair of the first image and the second image represents pair of images in which movement of muscles of facial expression of the photographic subject has difference equal to or greater than a specific value.

5. The machine learning program according to claim 1, wherein the generating of the third model includes

   performing machine learning that involves feature quantity based on a video in which the third image is included, and
   generating the third model.

6. The machine learning program according to claim 5, wherein the feature quantity is at least one of

   time-series data of output values obtained when an image group included in the video is input to the trained model,
   feature quantity related to distribution of the time-series data,
   one or more images selected from the image group based on distribution of the time-series data, and
   feature quantity of the one or more images.

7. A machine learning method implemented in a computer, comprising:

   generating a trained model that includes

      performing machine learning of a first model based on

         a first output value that is obtained when a first image is input to a first model in response to input of training data containing pair of the first image and a second image and containing a first label indicating which of the first image and the second image has captured greater movement of muscles of facial expression of a photographic subject,
         a second output value obtained when the second image is input to a second model that has common parameters with the first model, and
         the first label, and

      generating the trained model; and

   generating a third model that includes

      performing machine learning based on

         a third output value obtained when a third image is input to the trained model, and
         a second label indicating either intensity or occurrence of movement of muscles of facial expression of a photographic subject captured in the third image, and

      generating the third model.

8. The machine learning method according to claim 7, wherein pair of the first image and the second image represents pair of images of same photographic subject.

9. The machine learning method according to claim 7, wherein the first label is assigned based on measurement result obtained by a measurement apparatus by measuring movement of muscles of facial expression of the photographic subject.

10. The machine learning method according to claim 7, wherein pair of the first image and the second image represents pair of images in which movement of muscles of facial expression of the photographic subject has difference equal to or greater than a specific value.

11. The machine learning method according to claim 7, wherein the generating of the third model includes

    performing machine learning that involves feature quantity based on a video in which the third image is included, and
    generating the third model.

12. The machine learning method according to claim 11, wherein the feature quantity is at least one of

    time-series data of output values obtained when an image group included in the video is input to the trained model,
    feature quantity related to distribution of the time-series data,
    one or more images selected from the image group based on distribution of the time-series data, and
    feature quantity of the one or more images.

13. An estimation apparatus comprising a control unit that

    inputs a third image to a first machine learning model which is generated as a result of performing machine learning based on training data

        containing pair of a first image and a second image, and
        containing a first label indicating which of the first image and the second image has captured greater movement of muscles of facial expression of a photographic subject, and

    obtains a first output result, and
    inputs the first output result to a second machine learning model generated as a result of performing machine learning based on training data

        containing a second output result obtained when a fourth image is input to the machine learning model, and
        containing a second label indicating intensity of movement of muscles of facial expression of a photographic subject captured in the fourth image, and

    estimates either intensity or occurrence of movement of muscles of facial expression of a photographic subject captured in the third image.

14. The estimation apparatus according to claim 13, wherein pair of the first image and the second image represents pair of images of same photographic subject.

15. The estimation apparatus according to claim 13, wherein the first label is assigned based on measurement result obtained by a measurement apparatus by measuring movement of muscles of facial expression of the photographic subject.

16. The estimation apparatus according to claim 13, wherein pair of the first image and the second image represents pair of images in which movement of muscles of facial expression of the photographic subject has difference equal to or greater than a specific value.

17. The estimation apparatus according to claim 13, wherein operation of estimation includes inputting the first output result and a feature quantity, which is based on a video in which the third image is included, to the second machine learning model which is generated as a result of performing machine learning that involves feature quantity based on a video in which the fourth image is included.

18. The estimation apparatus according to claim 17, wherein the feature quantity is at least one of

    time-series data of output values obtained when an image group included in the video is input to the trained model,
    feature quantity related to distribution of the time-series data,
    one or more images selected from the image group based on distribution of the time-series data, and
    feature quantity of the one or more images.

# FIG.1

# FIG.2

EP 4 220 546 A1

# FIG.3

```
            ┌─────────────┐
            │    START    │
            └─────────────┘
                   │
                   ▼              ⌐S11
┌──────────────────────────────────────┐
│    CREATE TRAINING DATASET THAT       │
│    INCLUDES IMAGE PAIR STORED IN      │
│    IMAGE/LABEL DB AND INCLUDES        │
│  CORRECT ANSWER LABEL INDICATING      │
│    ORDER RELATION OF Intensity        │
└──────────────────────────────────────┘
                   │
                   ▼              ⌐S12
┌──────────────────────────────────────┐
│      USING TRAINING DATASET, GET      │
│     RETRAINED IN NEURAL NETWORK       │
└──────────────────────────────────────┘
                   │
                   ▼              ⌐S13
┌──────────────────────────────────────┐
│  STORED POST-TRAINING PARAMETERS IN   │
│          TRAINED MODEL DB             │
└──────────────────────────────────────┘
                   │
                   ▼              ⌐S14
┌──────────────────────────────────────┐
│    READ IMAGES AND Intensity FROM     │
│           IMAGE/LABEL DB              │
└──────────────────────────────────────┘
                   │
                   ▼              ⌐S15
┌──────────────────────────────────────┐
│   OBTAIN ORDER Intensity, AND CREATE  │
│   TRAINING DATASET IN WHICH Intensity │
│   ARE TREATED AS LABELS FOR ORDER     │
│              Intensity                │
└──────────────────────────────────────┘
                   │
                   ▼              ⌐S16
┌──────────────────────────────────────┐
│  USING TRAINING DATASET, GET TRAINED  │
│       IN CONVERSION FUNCTION          │
└──────────────────────────────────────┘
                   │
                   ▼              ⌐S17
┌──────────────────────────────────────┐
│  STORE POST-TRAINING PARAMETERS IN    │
│        CONVERSION MODEL DB            │
└──────────────────────────────────────┘
                   │
                   ▼
            ┌─────────────┐
            │     END     │
            └─────────────┘
```

# FIG.4

START

S21
OBTAIN TARGET IMAGE FOR ESTIMATION

S22
OBTAIN PARAMETERS FROM TRAINED MODEL DB AND BUILD NEURAL NETWORK

S23
USING NEURAL NETWORK, ESTIMATE ORDER Intensity WITH RESPECT TO IMAGE

S24
OBTAIN PARAMETERS FROM CONVERSION MODEL DB AND BUILD CONVERSION FUNCTION

S25
CONVERT ORDER Intensity INTO Intensity USING CONVERSION FUNCTION

S26
OUTPUT ESTIMATED LABEL

END

# FIG.5

# FIG.6

EP 4 220 546 A1

# FIG.7

S1

- IMAGE/LABEL DB (40)
- CONVERSION DATASET CREATING UNIT (12a)
- PAIR DATASET CREATING UNIT (10)
- PRETRAINED MODEL DB (41)
- ORDER SCORE LEARNING UNIT (11)
- CONVERSION FUNCTION LEARNING UNIT (13a)
- TRAINED MODEL DB (20)
- CONVERSION MODEL DB (21)

S2

- IMAGE (50)
- ORDER SCORE ESTIMATING UNIT (30)
- CONVERSION PROCESSING UNIT (31a)
- LABEL (51)
- SOURCE VIDEO (50a)

1c

EP 4 220 546 A1

# FIG.8

# FIG.9

## INTERNATIONAL SEARCH REPORT

| International application No. |
| --- |
| PCT/JP2020/036456 |

**A. CLASSIFICATION OF SUBJECT MATTER**
Int. Cl. G06T7/00(2017.01)i
FI: G06T7/00 350B

According to International Patent Classification (IPC) or to both national classification and IPC

**B. FIELDS SEARCHED**

Minimum documentation searched (classification system followed by classification symbols)
Int. Cl. G06T7/00

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | YANG, Peng et al. RankBoost with l1 regularization for Facial Expression Recognition and Intensity Estimation. 2009 IEEE 12th International Conference on Computer Vision (ICCV) [online], 2009 [retrieved on 30 November 2020], pp. 1018-1025, Retrieved from the Internet: <URL: https://ieeexplore.ieee.org/stamp/stamp.jsp?tp=&arnumber=5459371&tag=1> entire text | 1-18 |

☒ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 30.11.2020 | 22.12.2020 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2020/036456

C (Continuation).    DOCUMENTS CONSIDERED TO BE RELEVANT

| Category* | Citation of document, with indication, where appropriate, of the relevant passages | Relevant to claim No. |
|---|---|---|
| A | SU, Lumei et al. Early Facial Expression Recognition using Early RankBoost, 2013 10th IEEE International Conference and Workshops on Automatic Face and Gesture Recognition (FG) [online], 2013 [retrieved on 30 November 2020], Retrieved from the Internet: <URL: https://ieeexplore.ieee.org/stamp/stamp.jsp?tp=&ar number=6553740> entire text | 1-18 |
| A | CN 109657586 A (CENTRAL CHINA NORMAL UNIVERSITY) 19 April 2019 (2019-04-19), entire text | 1-18 |
| A | JP 2014-119879 A (NIPPON HOSO KYOKAI) 30 June 2014 (2014-06-30), entire text | 1-18 |

Form PCT/ISA/210 (continuation of second sheet) (January 2015)

INTERNATIONAL SEARCH REPORT

Information on patent family members

International application No.

PCT/JP2020/036456

| Patent Documents referred to in the Report | Publication Date | Patent Family | Publication Date |
|---|---|---|---|
| CN 109657586 A | 19.04.2019 | (Family: none) | |
| JP 2014-119879 A | 30.06.2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019294868
- JP 2020057111 A
- JP 2018036734 A